# EUROPEAN PATENT APPLICATION

(11) **EP 4 809 804 A1**
(43) Date of publication of application: **23.09.2026**
(21) Application number: 26164638.4
(22) Date of filing: 13.03.2026
(51) Int. Cl.: A01C 11/02

(54) **RETRIEVAL ASSEMBLY FOR AGRICULTURAL TRANSPLANTING MACHINES**

(30) Priority: 17.03.2025 IT 202500005322
(71) Applicant: Checchi e Magli S.r.l., 40054 Budrio BO (IT)
(72) Inventor: LAZZARI, Lorenzo, 40061 MINERBIO BO (IT)
(74) Representative: Modiano, Micaela Nadia

(57) **Abstract**

A retrieval assembly for agricultural transplanting machines (100), for retrieving from respective seats (A) plant elements (B) intended for transplanting, each comprising a substrate (C) and a seedling (D) coupled to the substrate (C);
the assembly (1) comprises a movement apparatus (2) for at least one grip unit (3) which comprises a pair of laterally mutually adjacent needles (4), which are configured to at least partially penetrate the substrate (C) and consequently hold the plant element (B).

## Description

The present invention relates to a retrieval assembly for agricultural transplanting machines.

As is known, among the various types of agricultural machines, transplanting machines are widespread and are used to transplant, along a stretch of land, plant elements constituted by seedlings which have already been partially germinated in another growth location. Evidently, the use of such machines makes it possible to automate at least partially an activity that, if performed manually as in the past, is particularly burdensome for the laborers involved and requires decidedly more time (often unacceptable for the needs of the market), with a consequent limit on the hourly productivity that can be obtained.

Machines of the type described above therefore comprise a frame which can be coupled to a tractor, so that it can be towed along the ground of interest, a magazine for receiving plant elements (i.e. seedlings, fixed to respective substrates of the type for example of a plug of turf), a furrowing apparatus which opens the furrow along the soil intended to receive the plant elements and, optionally, apparatuses capable of closing the furrow again once transplantation is complete.

Furthermore, the transplanting machine comprises means for manipulation and movement, which according to various methods retrieve the plant elements from the magazine and lay them one by one in the furrow just opened, in order to perform the transplantation.

In particular, normally the plant elements are supplied to the magazine in perforated trays, which have a plurality of through holes that constitute a like number of seats for respective plant elements: the means for manipulation and movement comprise an automatic assembly that retrieves the plant elements from the seats and transfers them to a distribution system, which in turn is responsible for delivering them one by one in an orderly fashion to the furrowing apparatus.

In an implementation solution that is now well-established, the automatic assembly that performs the retrieval is provided with a plurality of conveniently contoured pressers, which are introduced into the seats just described in order to exert a push on the substrate, so as to cause the egress on the opposite side of the plant elements, which are then retrieved in turn by other automated systems.

Such implementation solution is however not devoid of drawbacks.

The push exerted by each presser on the substrate can cause its deformation to the point where it may break: a part of the material (turf for example) of which it is composed can thus be damaged or lost, and this compromises the ability of the seedling to survive, once it has been transplanted in the soil of interest.

The aim of the present invention is to solve the above-mentioned problems, by providing an assembly that is capable of optimally retrieving plant elements from the magazine in which they are accommodated.

Within this aim, an object of the invention is to provide an agricultural machine with optimal methods of retrieving plant elements from the magazine with which it is provided.

Another object of the invention is to provide an assembly and a machine that are capable of retrieving a plant element which comprises a seedling coupled to its substrate, without causing damage to the latter, or to the seedling.

Another object of the invention is to provide an assembly and a machine that overcome the drawbacks of the prior art in a manner different from any existing solutions.

Another object of the invention is to provide an assembly and a machine that are highly reliable and certain to be safe in use.

Another object of the invention is to provide an assembly and a machine that can be implemented relatively simply and at low cost.

This aim and these and other objects which will become more apparent hereinafter are achieved by a retrieval assembly according to claim 1 and by an agricultural machine according to claim 10, optionally provided with one or more of the characteristics of the dependent claims.

Further characteristics and advantages of the invention will become more apparent from the detailed description that follows of a preferred, but not exclusive, embodiment of the assembly and of the machine according to the invention, which is illustrated by way of non-limiting example in the accompanying drawings wherein:
Figure 1 is a perspective view of the assembly according to the invention;

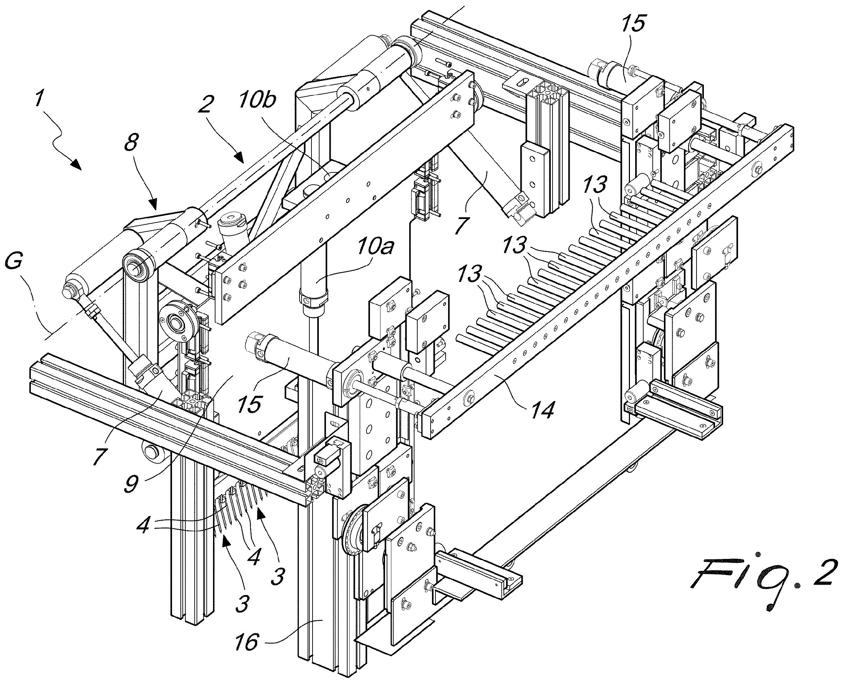

Figure 2 is a perspective view of the assembly according to the invention, from the opposite side with respect to Figure 1;

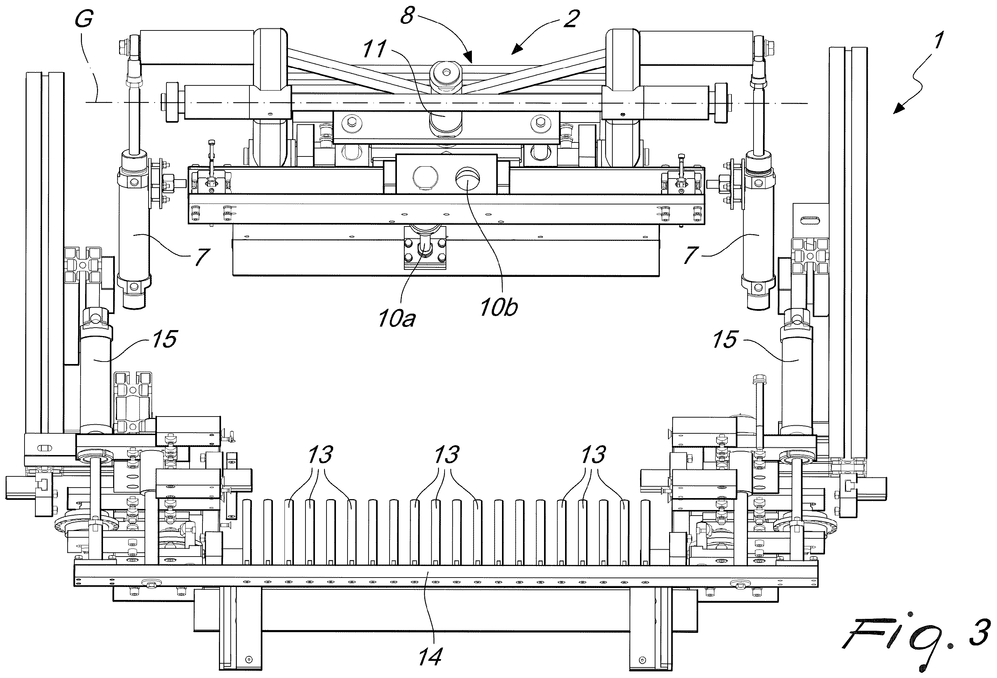

Figure 3 is a view from above of the assembly according to the invention;
Figure 4 is a perspective view of the grip units of the assembly of Figure 1, in a first configuration;
Figure 5 is a side view of the grip units of the assembly of Figure 1, in a second configuration;

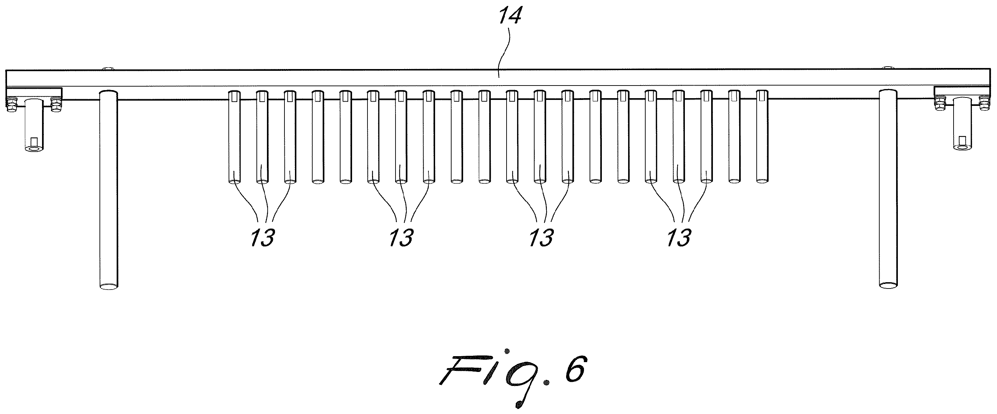

Figure 6 is a view from above of another component of the assembly of Figure 1;
Figure 7 is a perspective view of the agricultural transplanting machine according to the invention, seen from the rear and from the side;
Figure 8 is a perspective view of a portion of the agricultural machine of Figure 7, seen from the rear and from the side;
Figure 9 is a greatly enlarged detail of the magazine of Figure 8, with some plant elements inserted in the respective seats.

With particular reference to the figures, the reference numeral 1 generally designates a retrieval assembly for agricultural transplanting machines, which in turn is designated by the reference numeral 100.

The following pages will describe the configuration of a possible transplanting machine 100 designed to incorporate one or more assemblies 1 (which is also the subject matter of the protection claimed herein), but it should be made clear from this point onward that the scope of protection claimed herein must be understood as extending to any agricultural machine that comprises one or more assemblies 1, and also to the use, the exploitation, the production, the sale or the offer for sale of assemblies 1, be they fitted as standard on any agricultural machine or supplied separately.

The assembly 1 is adapted to retrieve, from respective seats A, plant elements B intended for transplanting, each of which comprises a base substrate C and a seedling D, which is coupled (stably) to the substrate C.

The seedlings D can be any plant variety that has undergone a first life cycle (or which has at least partially germinated) in another cultivation location (a nursery seed tray E, a greenhouse, etc). The substrate C, for example, can be a plug of turf or of another material.

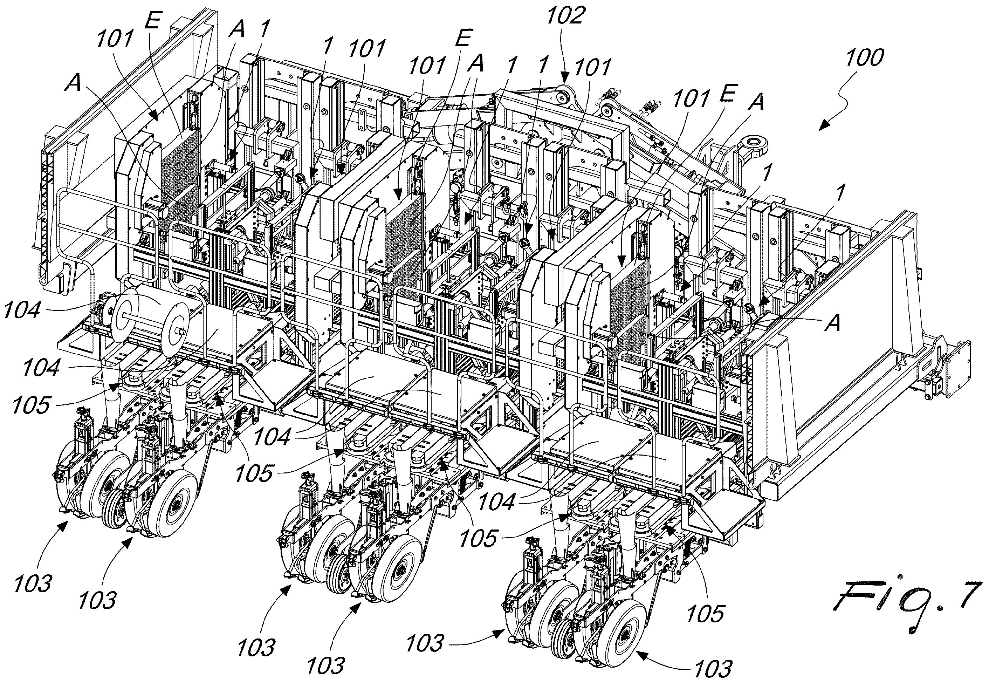

As can be seen in Figures 7-9, the seats A can be constituted by channels (preferably through channels) provided along a tray E (made of polymeric material, for example): the substrates C are contained (completely or partially) in the channels, while the seedlings D can protrude externally from the footprint of the tray E (from one of its greater faces).

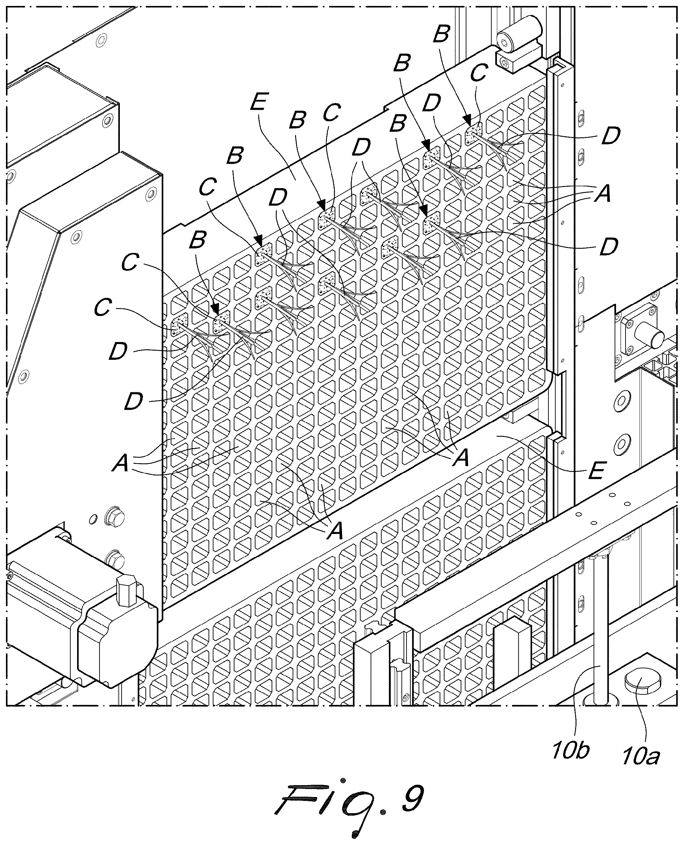

Figure 9 shows one possible way of accommodating the plant elements B in the seats A: in the figure, for greater clarity, only some seats A are filled with respective plant elements B, but it should be noted that typically all the seats A of the tray E are filled with respective plant elements B.

One or more trays E can be accommodated in a magazine 101 with which the machine 100 is provided: the assembly 1 is responsible for retrieving the plant elements B from the seats A (in the ways that will be described below), while the trays E are placed in the magazine 101, typically for the purpose of delivering them to other systems for distribution and movement, fitted on board the machine 100.

According to the invention, the assembly 1 comprises a movement apparatus 2 for at least one grip unit 3: the movement imparted by the apparatus 2 allows the unit 3 to approach a seat A in order to retrieve a plant element B; once the latter has been retrieved, the apparatus 2 moves the grip unit 3 to the designated place for delivery of the plant element B (in the meantime, held by the unit 3) downstream, after which the apparatus 2 and the unit 3 can begin a new cycle of retrieval and delivery.

On the following pages a specific embodiment of the apparatus 2 (capable of moving the unit 3 in a specific way) will be described, but it should be emphasized that any apparatus 2 capable of moving the unit 3 and of making it perform the function described above should be understood as included in the scope of protection claimed herein.

Furthermore, according to the invention, the grip unit 3 comprises a pair of mutually adjacent needles 4, which are configured to penetrate at least partially into the substrate C and then to perform the consequent holding of the plant element B. The apparatus 2 then brings the unit 3 toward a seat A and then pushes the needles 4 into the latter, where a plant element B is contained. Thus, the needles 4 can penetrate into the substrate C (preferably, only brushing against the seedling D) and hold it firmly, in order to enable the unit 3 to retrieve the plant element B from the seat A. The apparatus 2 then moves the plant element B held by the unit 3 to the designated destination, where, in various ways, it can be released or handed over to other contrivances.

Therefore the set aim is achieved, in that the retrieval occurs without applying an intense pressure on the substrate C to push it out from the seat A (as conversely happens in conventional solutions), and therefore without risk of breakage. In fact, the needles 4 (the cross-section of which is conveniently chosen and preferably with the free end pointed) can penetrate into the substrate C, without compromising its integrity and at the same time ensuring an effective hold of the plant element B.

In particular, the assembly 1 can comprise a plurality of grip units 3, arranged mutually side by side, in order to retrieve a plurality of plant elements B simultaneously from corresponding mutually-aligned seats A. It is also possible to have a different mutual arrangement of the units 3, including as a function of the specific arrangement of the seats A in the trays E.

Usually, as shown in the accompanying figures, the seats A are distributed in the trays E in a plurality of mutually parallel rows: the units 3 can be mutually aligned and deployed in a sufficient number to simultaneously retrieve all the plant elements B contained in the seats A of the same row: in each cycle, a row of plant elements B is retrieved, and after a number of cycles equal to the number of rows has been executed, the entire tray E can be emptied.

In the discussion below, what is said with regard to a specific unit 3 (and with regard to the associated pair of needles 4) is to be understood as extending to any desired number of units 3 and preferably to all the units 3 with which the assembly 1 is equipped.

Usefully, the assembly 1 can comprise means 5 for varying the arrangement of the needles 4 of at least one grip unit 3 (and preferably of the needles 4 of all the units 3), which are (automatically) activateable for the reversible transition from a first configuration, in which the two needles 4 of the pair of needles 4 with which a unit 3 is provided are substantially mutually parallel, to a second configuration, in which the two needles 4 are convergent (until they substantially touch at their free ends).

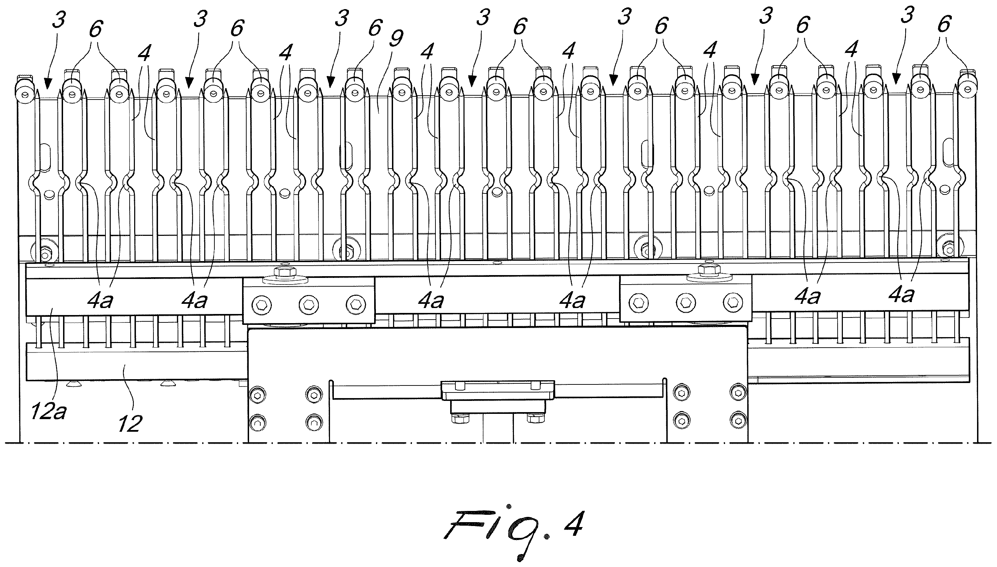

The first configuration can for example be that of Figure 4.

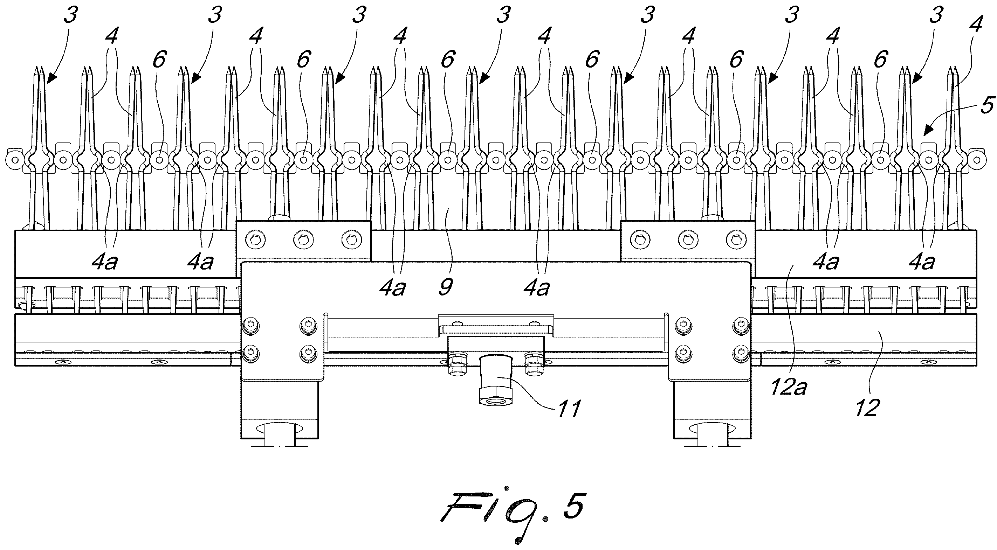

The second configuration on the other hand can be, for example, that of Figure 5.

The penetration of the substrate C can happen when the needles 4 are located in the first configuration, and subsequently, when the needles 4 have already at least partially penetrated (and preferably when their free ends have reached the bottom of the substrate C), the transition to the second configuration is activated, so as to improve the efficacy of the hold and ensure a superior extraction of the plant element B, while limiting or removing the risk of damage and therefore any conditions of stress for the seedling D being transplanted.

More specifically, in an embodiment of significant practical interest (which does not rule out the possibility of adopting other practical solutions, which remain within the scope of protection claimed herein), the means 5 comprise at least one obstacle 6, which is configured to affect at least one bend 4a, formed by a respective needle 4, substantially at the end of the insertion stroke of the respective pair of needles 4 into the corresponding seat A, imparted by the movement apparatus 2. Typically, the insertion stroke (and the subsequent extraction stroke) is straight.

Thus, while normally the presence of the obstacle 6 does not interfere with the travel of the needles 4, when the bend 4a abuts against the obstacle 6, such bend, which protrudes laterally and determines a localized increase in the transverse encumbrance of the needle 4, is forced to turn or deform, so as to move closer to the other needle 4 of the same unit 3.

More specifically, and as shown in the accompanying figures, the assembly 1 can comprise a plurality of obstacles 6 which are mutually aligned, each of which is configured to affect two bends 4a, formed by two respective needles 4 belonging to two adjacent grip units 3, substantially at the end of the stroke for inserting the corresponding pairs of needles 4 into the corresponding seats A. Thus, each needle 4 is pushed toward the other needle 4 of the same pair.

In an embodiment of significant practical interest, but not limiting of the invention, the movement apparatus 2 comprises first of all at least one first actuator 7, which is configured to impose the rotation of a grip unit 3 (or of all the units 3).

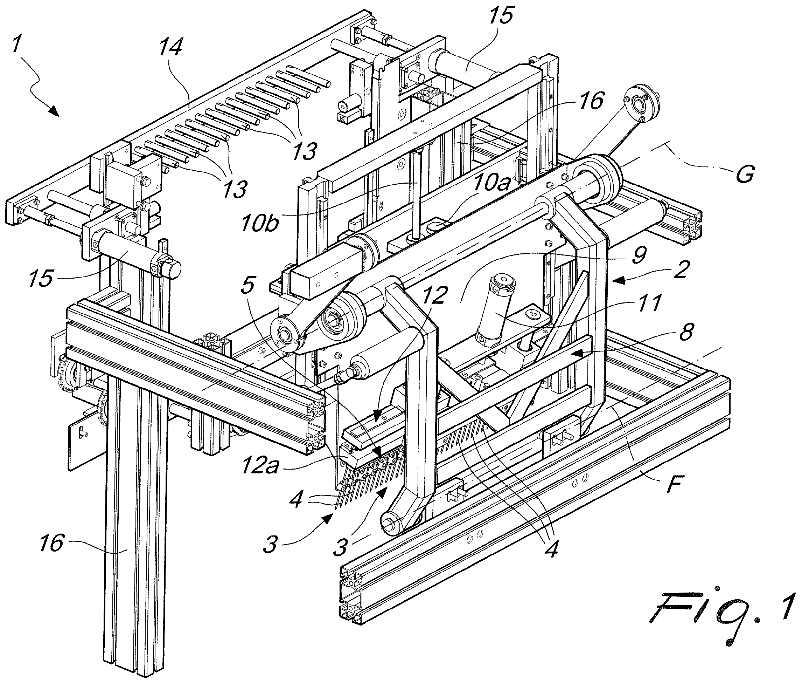

The rotation makes it possible in particular to bring the needles 4 from the orientation assumed at rest, in which, as in Figure 1, they are arranged substantially vertical, in the orientation they assume when they penetrate into the seats A. This orientation is typically horizontal in that usually the trays E, as in the accompanying figures, are arranged in the magazine 101 so that the face of each tray E from which the seats A face outward (and from which the seedlings D protrude) is vertical.

Preferably, the apparatus 2 comprises, as in the accompanying figures, two first actuators 7, which are arranged at mutually opposite flanks of the grip units 3 and cooperate to cause their desired rotation.

More specifically, the first actuator 7 can be configured to cause the rotation of a framework 8 for supporting a grip unit 3 (or all the units 3) about a first horizontal axis F. More specifically, the rotation about the first axis F entails a stroke of amplitude 10° (or in any case limited), in one direction or the other. The framework 8 can comprise one or more beams, conveniently arranged, so as to provide effective support to the units 3.

Furthermore, by virtue of the specific shape structure of the kinematic chain interposed between the first actuator 7 and the grip units 3, the actuation of the first actuator 7 also causes the rotation of a sliding support table 9 for the needles 4, about a second horizontal axis G. The rotation about the second axis G is typically of approximately 90°, in order to obtain the transition from the vertical orientation of the needles 4 to the horizontal orientation, and vice versa.

Furthermore, the movement apparatus 2 comprises at least one second actuator 10a, 10b, which is configured to actuate the translation of a grip unit 3 (or of all the grip units 3) along a direction parallel to the needles 4 (parallel to the orientation they assume in the first configuration). The second actuator 10a, 10b thus makes it possible to perform the travel of the units 3 toward and away from the seats A.

As shown in the accompanying figures, the back-and-forth travel is preferably obtained by means of two second actuators 10a, 10b side-by-side, so as to contain the overall encumbrance: one of these second actuators (indicated in the figures with the reference numeral 10a) is responsible for effecting the travel of the unit 3 toward and away from the seats A, while the other second actuator (indicated in the figures with the reference numeral 10b) cooperates with the other to deliver the row of plant elements B retrieved from the trays E to the contrivances downstream.

Furthermore, the movement apparatus 2 comprises at least one third actuator 11, which is configured to actuate the stroke for inserting a pair of needles 4 (and preferably of all the pairs) into the respective seat A. The insertion stroke (and the subsequent extraction stroke, which is also actuated by the third actuator 11) is a translation (of limited extent) along a direction parallel to the needles 4 (parallel to the orientation they assume in the first configuration).

More specifically, the third actuator 11 can be configured to actuate the translation of a plate 12 which comprises a plurality of accommodation and guiding holes for corresponding needles 4.

In other words, the plate 12 is provided with as many holes as there are needles 4, which are accommodated and guided into these holes and which, in pairs, define respective units 3.

Even more specifically, and as shown in the accompanying figures, the needles 4 extend from the plate 12 and are furthermore enclosed in an additional guiding block 12a, which is integral with the table 9. Each obstacle 6 (which for example is a form of cylindrical pivot) rises directly from the table 9: the third actuator 11 actuates the translation of the plate 12 and of the needles 4 with respect to the table 9 and to the obstacles 6 (which are arranged on the side opposite from that of the plate 12, with respect to the block 12a) and during the translation the transition occurs from the first to the second configuration, by virtue of the obstacles 6 which affect the bend 4a. The return to the first configuration can be obtained via the simple elastic reaction of the needles 4 themselves, but it can also be imposed by an appropriate accessory (a spring for example).

The actuators 7, 10a, 10b, 11 can for example be hydraulic or pneumatic cylinders (and be chosen to be of the same type or of mutually different types).

It should be noted however that the movement of the unit 3 can be obtained in any manner, while remaining within the scope of protection claimed herein.

Usefully, the assembly 1 comprises at least one presser 13, which is reversibly movable on command along a trajectory for insertion into a respective seat A (and for extraction therefrom), on the opposite side from the needles 4 (with respect to the seat A and to the respective tray E), in order to apply a consequent pressing on the substrate C of a respective plant element B, to assist the retrieval action performed by a respective said grip unit 3. Typically, the trajectory traveled is straight and horizontal (perpendicular to the greater faces of the tray E).

So while the conventional solutions resort to only the pushing action to retrieve the plant elements B, the presser 13 is only responsible for aiding the action of the needles 4, and therefore the push it applies is of a decidedly lesser extent, and is such as to not compromise the integrity of the substrate C (as conversely happens with the conventional solutions, as has previously been seen).

It should be noted that the use of the presser 13 is envisaged when the tray E is provided with seats A that are open outward on both of its greater faces: on one side, the two needles 4 of a unit 3 are introduced into a seat A and, on the opposite side, the presser 13 is introduced.

More specifically, as shown in the accompanying figures, the assembly 1 can comprise a bar 14 which supports a plurality of pressers 13 and which can perform a vertical translation and a horizontal translation, parallel to the insertion trajectory. The horizontal translation (actuated for example by fourth actuators 15) makes it possible to insert and extract the pressers 13 into/out of the seats A; the vertical translation (along guiding profiled elements 16, for example) makes it possible to move the pressers 13 from one row of seats A to another.

As mentioned above, in addition to the assembly 1, protection is also claimed herein for an agricultural transplanting machine 100, of which an example embodiment (which should not be understood as in any way limiting of the scope of protection) is shown in Figures 7-9.

The machine 100 comprises at least one supporting frame 102; the frame 102 can be configured to be coupled to a farm tractor (not shown in the accompanying figures, but which can be conventional).

Furthermore, it is also possible to install the machine 100 on a self-propelled vehicle, so as to make the machine 100 usable even in the absence of tractors.

The coupling and/or the installation can be done in any way that the person skilled in the art deems appropriate. The frame 102 can also be collapsible, in order to enable a temporary reduction in the bulk (in particular the transverse footprint) of the machine 100 and so facilitate road travel.

Furthermore, as mentioned above, the machine 100 comprises at least one magazine 101 for accommodating plant elements B intended for transplanting, each comprising a base substrate C and a seedling D coupled to the substrate C. These are the plant elements B described on the foregoing pages. The magazine 101 can comprise a compartment for accommodating the trays E containing the plant elements B to be transplanted; furthermore, the magazine 101 can be optionally provided with an apparatus for moving the trays E forward and/or ejecting the empty trays E. The magazine 101 can be provided in any manner, while remaining within the scope of protection claimed herein. Typically, the magazine 101 is supported directly or indirectly by the frame 102.

Furthermore, the machine 100 comprises at least one furrowing device 103, which is configured to provide a furrow along the soil, during the advancement of the frame 102 (and of the entire machine 100).

The furrowing device 103 can be provided in any manner, while remaining within the scope of protection claimed herein. Typically, the furrowing device 103 is also supported directly or indirectly by the frame 102.

Furthermore, the machine 100 comprises a system for moving plant elements B, which is configured to retrieve plant elements B from the magazine 101 (and therefore, for example, from the trays E) and deliver them to the furrowing device 103.

Typically, the movement system too is supported directly or indirectly by the frame 102.

The machine 100 can further be provided with one or more walkable platforms 104, which make it possible for operators to perform the operations to supply each magazine 101 and to load/unload full/empty trays E.

According to the invention, the movement system comprises at least one retrieval assembly 1 according to what is shown on the foregoing pages. The movement system can further comprise other contrivances, including conventional devices, which receive and/or accept the plant elements B from the assembly 1 and transfer them to the device 103.

For example, the assembly 1 can transfer the plant elements B to a sandwich belt conveyor 105, which advances the plant elements B one by one until they are released into the device 103.

The role of the movement system is therefore to retrieve the plant elements B as they are distributed in the trays E and to deliver them one by one to the furrowing device 103, which releases them onto the ground, so transplanting them.

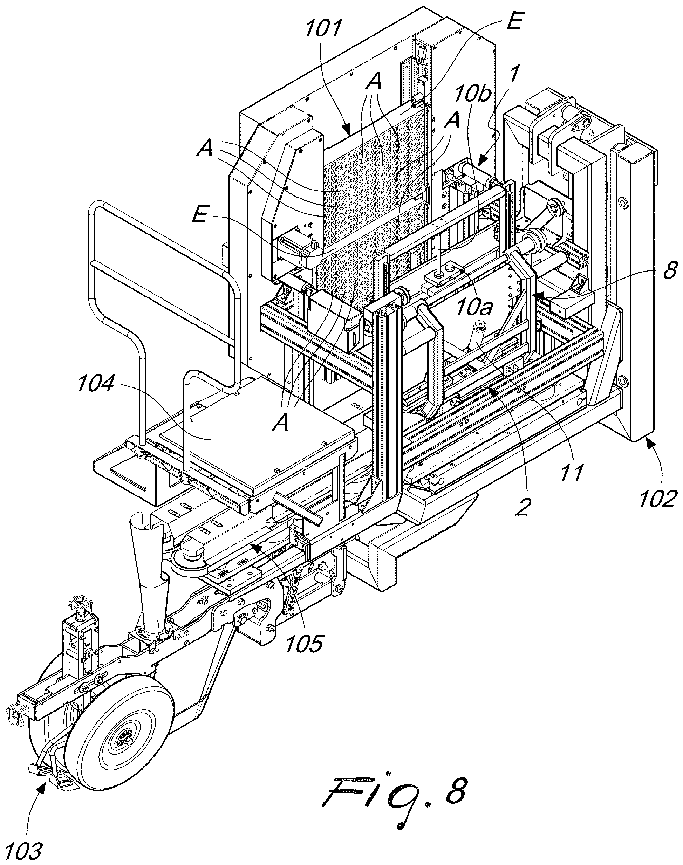

As shown in the accompanying figures, preferably the machine 100 is of the modular type: it can comprise a plurality of modules side-by-side (there are six in Figure 7); each module (like the module in Figure 8) comprises a magazine 101, a furrowing device 103, and an assembly 1. Each module places plant elements B to be transplanted along the ground, forming a respective row, parallel to the advancement direction.

The operation of the retrieval assembly 1 and of the agricultural transplanting machine 100 according to the invention can be easily understood from the foregoing pages, but in any case a brief summary is also given below.

The assembly 1 and the machine 100 can be made advance along the ground of interest using a tractor or by being installed on a self-propelled vehicle, and during the advancement the machine 100 transplants the plant elements B that were previously contained in the magazine 101 in the soil.

In particular, the assembly 1 is responsible, during the advancement, for retrieving (rows of) plant elements B from respective seats A provided in a tray E accommodated in the magazine 101, and for transferring them to other contrivances downstream.

Each plant element B is retrieved by virtue of a pair of needles 4, which penetrate into the substrate C and then exit from the seat A, pulling the plant element B with them.

This particular choice makes it possible to retrieve the plant elements B while avoiding the deformation of the substrate C and the consequent loss of turf (or other material of which the substrate C is composed), which would considerably compromise the survival of the seedling D in the field.

Differently from the machines currently on the market, which perform the retrieval solely by virtue of the push applied on the substrate C (from the opposite side to that of the seedling D), with consequent breakage/compression of the seedling, in the assembly 1 the pressers 13 are accessory components, which are inserted into the seat A only to accompany the substrate C, while leaving the main action of holding and extracting to the conveniently-contoured needles 4.

In particular, as has been seen, the needles 4 can be provided with a bend 4a or in any case with the capacity to pass from the first configuration to the second, in order to obtain the insertion in the substrate C while the needles 4 are parallel, and then make the two points converge only when they reach the bottom of the substrate C.

In practice it has been found that the assembly 1 and the agricultural machine 100 according to the invention fully achieve the set aim and objects, in that the use of a pair of needles 4 makes it possible to retrieve plant elements B from the magazine 101 in which they are contained, in an optimal manner.

The invention, thus conceived, is susceptible of numerous modifications and variations, all of which are within the scope of the appended claims. Moreover, all the details may be substituted by other, technically equivalent elements.

In practice the materials employed, provided they are compatible with the specific use, and the contingent dimensions and shapes, may be any according to requirements and to the state of the art.

The disclosures in Italian Patent Application No. 102025000005322 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each component or object identified by way of example by such reference signs.

## Claims

1. A retrieval assembly for agricultural transplanting machines (100), for retrieving from respective seats (A) plant elements (B) intended for transplanting, each comprising a substrate (C) and a seedling (D) coupled to the substrate (C), **characterized in that** it comprises a movement apparatus (2) for at least one grip unit (3) which comprises a pair of laterally mutually adjacent needles (4), which are configured to at least partially penetrate the substrate (C) and consequently hold the plant element (B).

2. The assembly according to claim 1, **characterized in that** it comprises a plurality of said grip units (3), which are laterally mutually adjacent, for the simultaneous retrieval of a plurality of plant elements (B) from corresponding mutually aligned seats (A).

3. The assembly according to claim 1 or 2, **characterized in that** it comprises means (5) for varying the arrangement of said needles (4) of at least one said grip unit (3), which can be activated for the reversible transition from a first configuration, in which said needles (4) are substantially mutually parallel, to a second configuration, in which said needles (4) are convergent.

4. The assembly according to claim 3, **characterized in that** said means (5) comprise at least one obstacle (6), configured to affect at least one bend (4a), formed by a respective said needle (4), substantially at the end of the stroke for inserting the respective pair of said needles (4) into the corresponding seat (A), imparted by said movement apparatus (2).

5. The assembly according to claims 2 and 4, **characterized in that** it comprises a plurality of said obstacles (6), which are mutually aligned, each of said obstacles (6) being configured to affect two of said bends (4a), formed by two respective said needles (4) of two said adjacent grip units (3), substantially at the end of the stroke for inserting the corresponding pairs of said needles (4) into the corresponding seats (A).

6. The assembly according to claim 1, **characterized in that** said movement apparatus (2) comprises at least:
- a first actuator (7), configured to rotate at least one said grip unit (3),
- a second actuator (10a, 10b), configured to translate at least one said grip unit (3) along a direction which is parallel to said needles (4),
- a third actuator (11), configured to actuate the stroke for inserting at least one pair of said needles (4) into the respective seat (A).

7. The assembly according to claim 6, **characterized in that** said third actuator (11) is configured to translate a plate (12) comprising a plurality of accommodation and guiding holes for corresponding said needles (4).

8. The assembly according to one or more of the preceding claims, **characterized in that** it comprises at least one presser (13), which is reversibly movable on command along a trajectory for insertion into a respective seat (A), on the opposite side from said needles (4), and for consequent pressing on the substrate (C) of a respective plant element (B), to assist the retrieval action performed by a respective said grip unit (3).

9. The assembly according to claim 8, **characterized in that** it comprises a bar (14) which supports a plurality of said pressers (13) and can perform a vertical translation and a horizontal translation, parallel to said insertion trajectory.

10. An agricultural transplanting machine comprising at least:
- a supporting frame (102),
- a magazine (101) for accommodating plant elements (B) intended for transplanting, each comprising a base substrate (C) and a seedling (D) coupled to the substrate (C),
- a furrowing device (103), configured to provide a furrow along the ground, during the advancement of said frame (102),
- a system for moving plant elements (B), which is configured to retrieve plant elements (B) from said magazine (101) and deliver them to said furrowing device (103),
**characterized in that** said movement system comprises at least one retrieval assembly (1) according to one or more of the preceding claims.
